# EUROPÄISCHE PATENTANMELDUNG

(11) **EP 1 970 730 A2**
(43) Veröffentlichungstag der Anmeldung: **17.09.2008**
(21) Anmeldenummer: 08101399.7
(22) Anmeldetag: 08.02.2008
(51) Int. Cl.: G01S 15/93

(54) **Verfahren zur Aktivierung einer Umfeldüberwachungseinrichtung und Steuergerät**

(30) Priorität: 16.03.2007 DE 102007012709
(71) Anmelder: ROBERT BOSCH GMBH, 70442 Stuttgart (DE)
(72) Erfinder: Schenk, Joachim, 38536 Seershausen (DE); Schenk, Winfried, 38108 Braunschweig (DE); Herbig, Juergen, 38667 Bad Harzburg (DE)

(57) **Zusammenfassung**

Die Erfindung betrifft ein Verfahren zur Aktivierung einer Umfeldüberwachungseinrichtung in einem Fahrzeug zur Ausgabe von Warnungen vor Hindernissen in der Umgebung des Fahrzeugs, wobei die Umfeldüberwachungseinrichtung in Abhängigkeit vom einem über Sensoren ermittelten Fahrzeugzustand aktiviert wird, dadurch gekennzeichnet, dass die Umfeldüberwachungseinrichtung zumindest dann aktiviert wird, wenn eine Bewegung des Fahrzeugs ermittelt wird.

## Beschreibung

### Stand der Technik

Die Erfindung geht aus von einem Verfahren zur Aktivierung einer Umfeldüberwachungseinrichtung und einem Steuergerät für eine Umfeldüberwachungseinrichtung nach Gattung der unabhängigen Ansprüche. Aus der DE 103 25 184 A1 ist bereits eine Abstandsmessvorrichtung bekannt, deren Sensoreinheit vor einer Abfahrt des Fahrzeugs dadurch aktiviert wird, dass ein gewünschter Fahrtbeginn bei Betätigung einer Fahrzeugbremse oder bei einer Betätigung einer Kupplungseinrichtung des Fahrzeugs ermittelt wird. Ferner ist es auch gezeigt, dass eine Abstandsmessvorrichtung erst mit dem Einlegen eines Ganges bei einem Getriebefahrzeug oder dem Einlegen einer Fahrstufe bei einem Automatikfahrzeug aktiviert wird.

### Offenbarung der Erfindung

### Vorteile der Erfindung

Das erfindungsgemäße Verfahren zur Aktivierung einer Umfeldüberwachungseinrichtung in einem Fahrzeug hat demgegenüber den Vorteil, dass die Umfeldüberwachungseinrichtung zumindest dann aktiviert wird, wenn eine Bewegung des Fahrzeugs ermittelt wird. Damit wird sichergestellt, dass eine Umfeldüberwachung und damit eine Warnung eines Fahrers vor Hindernissen in der Fahrzeugumgebung auch dann erfolgen kann, wenn sich das Fahrzeug ohne ein Zutun des Fahrers in Bewegung setzt. Ein solcher Fall kann insbesondere dann auftreten, wenn ein Fahrzeug vom Fahrer an einer leicht abschüssigen Stelle angehalten wird. Das zunächst stehende Fahrzeug kann sich nach einiger Zeit infolge der Hanglage selbst in Bewegung setzen, so dass eine Bewegung des Fahrzeugs ohne einen Eingriff des Fahrers erfolgt. Da eine solche Einleitung eines Bewegungsvorgangs des Fahrzeugs vom Fahrer mitunter unbemerkt erfolgen kann, kann ein Fahrer durch die automatische Aktivierung einer Umfeldüberwachungseinrichtung bei einem sich in Bewegung Setzen des Fahrzeugs vor einer unerwarteten Kollision mit einem Hindernis gewarnt werden. Ein entsprechendes unerwartendes sich in Bewegung Setzen kann sowohl bei einem vorübergehenden Halten in einem Parkbereich, insbesondere aber auch einem vorübergehenden Anhalten an einer Lichtzeichenanlage erfolgen. Selbst wenn andere Aktivierungsmechanismen, wie sie bereits aus dem Stand der Technik bekannt sind, eine Aktivierung der Umfelderfassungseinrichtung nicht einleiten würden, kann über eine Auswertung der Bewegung des Fahrzeugs in jedem Fall noch rechtzeitig eine Umfeldüberwachung und damit eine Warnung des Fahrers durchgeführt werden. Hierdurch ist es insbesondere auch möglich, einen ständigen Betrieb einer Umfeldüberwachungseinrichtung, der möglicherweise mit einer Störung anderer Fahrzeuge und mit einer unnötigen Leistungsaufnahme der Umfeldüberwachungseinrichtung verbunden wäre, zu vermeiden.

Durch die in den abhängigen Ansprüchen aufgeführten Maßnahmen sind vorteilhafte Weiterbildungen und Verbesserungen des in dem Hauptanspruch angegebenen Verfahrens möglich. Vorteilhaft ist es, eine Bewegung des Fahrzeugs über die Auswertung eines Wegsensors zu ermitteln. Derartige Wegsensoren, die zumeist als Raddrehsensoren aufgeführt sind, sind im Allgemeinen im Fahrzeug zur Unterstützung eines Anti-Blockier-Systems vorhanden, bei dem ein Blockieren eines Rades über entsprechende Radsensoren ermittelt wird. Entsprechende Radsensoren werden auch zur Feststellung eines zurückgelegten Fahrweges und damit zur Feststellung einer Bewegung des Fahrzeugs ausgewertet. In gleicher Weise kann auch eine Auswertung eines Geschwindigkeitssignals erfolgen, so dass bei einer Geschwindigkeit größer null eine Bewegung des Fahrzeugs festgestellt wird.

Es ist ferner vorteilhaft eine Richtung einer Fahrzeugbewegung zu ermitteln. Hierdurch kann ein Fahrer vor möglichen Hindernissen in der Fahrtrichtung des Fahrzeugs besser gewarnt werden, da dem Fahrer zusätzlich die Fahrtrichtung des Fahrzeugs angegeben werden kann. Ferner ist es vorteilhaft, insbesondere eine Umfelderfassungseinrichtung nur in derjenigen Fahrtrichtung zu aktivieren, in der sich das Fahrzeug fortbewegt. Hierdurch können insbesondere unnötige Warnungen in Bezug auf diejenige Richtung vermieden werden, in der sich das Fahrzeug gerade nicht fortbewegt.

Es ist weiterhin vorteilhaft, mit der Aktivierung der Umfeldüberwachungseinrichtung einem Fahrer einen Hinweis, vorzugsweise in akustischer und/oder optischer Form, auf die Aktivierung auszugeben. Hierdurch wird er selbst für den Fall, dass momentan kein Hindernis von der Umfeldüberwachungseinrichtung erfasst wird, bereits auf die Aktivierung und damit indirekt auch auf ein sich in Bewegung Setzen des Fahrzeugs hingewiesen.

Entsprechende Vorteile ergeben sich für ein erfindungsgemäßes Steuergerät für eine Umfeldüberwachungseinrichtung, das über eine Schnittstelle Sensoren zur Überwachung einer Fahrzeugbewegung auswertet und entsprechend, zumindest für den Fall, dass eine Fahrzeugbewegung festgestellt wird, eine Umfeldüberwachungseinrichtung aktiviert.

### Kurze Beschreibung der Zeichnung

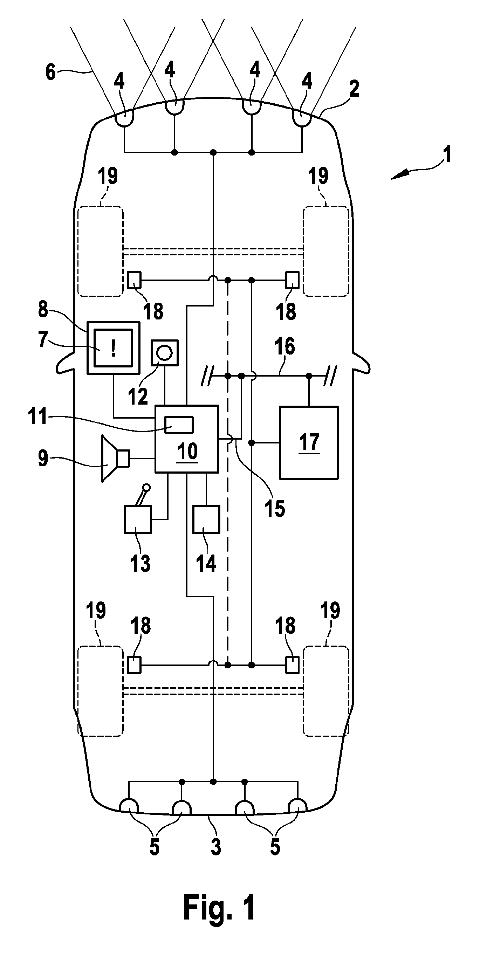

Ausführungsformen der Erfindung sind in der Zeichnung dargestellt und in der nachfolgenden Beschreibung näher erläutert. Es zeigt Figur 1 eine Aufsicht auf ein Fahrzeug zur Durchführung des erfindungsgemäßen Verfahrens zur Aktivierung einer Umfelderfassungseinrichtung mit einem erfindungsgemäßen Steuergerät.

### Ausführungsformen der Erfindung

In Figur 1 ist schematisch ein Kraftfahrzeug 1 dargestellt, an dessen Vorderseite 2 und an dessen Rückseite 3 jeweils Abstandssensoren 4 bzw. 5 angeordnet sind. Die Abstandssensoren 4, 5 sind in der hier gezeigten Ausführungsform als Ultraschallsensoren ausgebildet, die über ein Echoverfahren einen Abstand zu Hindernissen in der Umgebung des Fahrzeugs ermitteln. Hierzu wird ein Ultraschallsignal, dargestellt durch den Strahlkegel 6, von den Ultraschallsensoren ausgestrahlt und von einem möglichen Hindernis in der Fahrzeugumgebung reflektiert. Die Laufzeit des reflektierten Ultraschallsignals wird von den Sensoren 4, 5 gemessen und an ein Steuergerät 10 zur Auswertung weitergeleitet. Das Steuergerät 10 kann durch die Auswertung Hindernisse vor der Vorderseite 2 und/oder vor der Rückseite 3 des Fahrzeugs 1 ermitteln.

Anstelle von Ultraschallsensoren können auch andere Abstandssensoren wie beispielsweise Radarsensoren oder andere optische Abstandssensoren verwendet werden. In einer weiteren Ausführungsform ist es auch möglich, Hindernisse in einer Umgebung des Fahrzeugs durch eine Kameravorrichtung zu erfassen.

Werden Hindernisse vor bzw. hinter dem Fahrzeug erfasst, so wird eine Warnung 7 in einer Anzeige 8 an den Fahrer des Fahrzeugs ausgegeben. Alternativ oder ergänzend hierzu kann auch eine akustische Warnung über einen Lautsprecher 9 ausgegeben werden. Bei einer Ausführung einer Umfeldüberwachungseinrichtung in Kameraform kann in der Anzeige 8 ein Bild von einer Situation vor bzw. hinter dem Fahrzeug dargestellt werden. In der hier gezeigten Ausführungsform sind vier Sensoren jeweils an der Vorderseite 2 und an der Rückseite 3 des Fahrzeugs 1 angeordnet. In anderen Ausführungsformen können Sensoren auch nur an der Vorderseite oder nur an der Rückseite des Fahrzeugs vorgesehen sein. Ferner ist es auch möglich mehr oder weniger Sensoren zu verwenden bzw. auch an den Fahrzeugecken bzw. den Fahrzeugseiten entsprechende Sensoren vorzusehen.

Für die Auswertung verfügt das Steuergerät über eine Recheneinheit 11, die in einer bevorzugten Form eine Umgebungskarte erstellt sowie die Ausgabe der Warnung steuert. In einer weiteren Ausführungsform wird auch eine Kommunikation über die Schnittstellen des Steuergerätes 10 von der Recheneinheit 11 gesteuert.

Eine Versorgung der Sensoren 4, 5 sowie der Auswertungselektronik 10 erfolgt bei dem Fahrzeug 1 nicht ständig, um insbesondere nicht unnötig Signale in die Fahrzeugumgebung abzustrahlen und um andererseits eine unnötige Leistungsaufnahme der Umfeldüberwachungseinrichtung herbeizuführen. Somit kann die Überwachungseinrichtung beispielsweise durch ein Bedienelement 12 durch den Benutzer manuell aktiviert werden. In einer anderen Ausführungsform ist es auch möglich die Auswerteelektronik und die an der Rückseite des Fahrzeugs 3 vorgesehenen Sensoren 5 beim Einlegen eines Rückwärtsgangs zu aktivieren und die an der Vorderseite 2 des Fahrzeugs angeordneten Sensoren 4 beim Einlegen eines Vorwärtsgangs zu aktivieren. Hierzu ist das Steuergerät 10 über eine Schnittstelle mit einem Gangwahlsensor 13 verbunden, der einen eingelegten Vorwärtsgang bzw. Rückwärtsgang des Fahrzeugs 1 erfasst. In einer weiteren Ausführungsform kann auch bei einer Betätigung eines Fußpedals des Fahrzeugs, insbesondere eines Bremspedals und/oder eines Kupplungspedals, eine aktivierende Umfelderfassung mit den Sensoren 4, 5 erfolgen. Hierzu ist das Steuergerät 10 über eine entsprechende Schnittstelle mit einem Pedalsensor 14 verbunden. Im Allgemeinen wird somit einer Bewegung des Fahrzeugs entweder ein Einlegen eines Ganges bzw. einer Fahrstufe sowie einer Betätigung eines Pedals vorausgehen, so dass eine Umfeldüberwachung in vielen Fällen bereits über das Bedienelement 12, den Gangwahlsensor 13 oder den Pedalsensor 14 aktiviert wird.

Für den Fall, dass eine solche Aktivierung noch nicht erfolgt ist, weist das Steuergerät 10 ferner eine Schnittstelle 15 auf, über die das Steuergerät 10 bevorzugt über einen Datenbus 16, beispielsweise einen CAN-Bus (Controller Area Network) mit einem Steuergerät 17 zur Auswertung von Radbewegungssensoren 18 verbunden sind, die bevorzugt an einem oder mehreren der Räder des Fahrzeugs vorgesehen sind und die jeweils eine Bewegung eines der Räder erfassen. In einer ersten Ausführungsform ist das Steuergerät 17 als ein Steuergerät zur Bestimmung einer Fahrzeuggeschwindigkeit ausgeführt, das aus der Ableitung des aus der Radbewegung sich ergebenden Wegsignals eine Geschwindigkeit des Fahrzeugs 1 bestimmt. In einer weiteren Ausführungsform ist das Steuergerät 17 als ein Bremssteuergerät ausgeführt, das ein Anti-Blockiersystem des Fahrzeugs betreibt. Hierdurch können die in der Figur 1 nicht gezeigten Fahrzeugbremsen von dem Steuergerät 17 derart angesteuert werden, das ein Blockieren der in der Figur 1 gestrichelt gezeigten Räder 19 des Fahrzeugs vermieden kann.

In einer ersten Ausführungsform liefern die Wegsensoren 18, insbesondere für die Verwendung mit dem Steuergerät 17 als ein ABS-Steuergerät, nur eine Information darüber, ob sich eines der Räder 19 jeweils dreht oder nicht dreht. Für den Fall, dass keine Drehung vorliegt und dass auch keine sonstige Betätigung der weiteren für eine Aktivierung der Umfelderfassung vorhandenen Sensoren über die Schnittstellen des Steuergeräts 10 einen entsprechenden Befehl meldet, so bleibt die Umfelderfassung inaktiv. Wenn jedoch die Bewegung wenigstens eines der Räder 19 über das Steuergerät 17 und den Datenbus 16 an das Steuergerät 10 übermittelt wird, so veranlasst die Recheneinheit 11 des Steuergerätes 10 einen Start einer Messung über die Sensoren zur Erfassung von Hindernissen in der Umgebung des Fahrzeugs. Wird ein Hindernis erfasst, beispielsweise ein anderes Fahrzeug in einem Abstand von weniger als 5 Metern vor bzw. hinter dem Fahrzeug, so wird eine Warnung in der Anzeige 8 optisch und/oder über den Lautsprecher 9 akustisch ausgegeben. In einer Ausgestaltung der Erfindung kann auch bereits bei einer Aktivierung der Umfeldüberwachungseinrichtung infolge einer Bewegung wenigstens eines Rades eine Warnung über die Anzeige 8 bzw. den Lautsprecher 9 ausgegeben werden, beispielsweise die Einblendung eines Warnsignals oder eine kurze Tonausgabe über den Lautsprecher 9.

In einer weiteren Ausführungsform können die Wegsensoren 18 auch dazu ausgelegt sein, eine Drehrichtung der Räder 19 an das Steuergerät 17 zu übermitteln. Die entsprechende Information wird ebenfalls an das Steuergerät 10 weitergeleitet. Für den Fall, dass sich das Fahrzeug nach vorne bewegt, also in Richtung seiner Vorderseite 2, werden in dieser Ausführungsform nur die Sensoren 4 an der Vorderseite 2 des Fahrzeugs aktiviert. Wird eine Information darüber ermittelt, dass sich das Fahrzeug rückwärts bewegt, also in Richtung seiner Rückseite 3, so wird nur über die Sensoren 5 an der Rückseite 3 eine Messung zu den Abständen zu Hindernissen an dem Steuergerät 10 veranlasst.

Bei einer Ausführung der Sensoren zur Umfelderfassung als eine Kamera zur Überwachung des Fahrraums vor bzw. hinter dem Fahrzeug wird entsprechend in der Anzeige 8 ein Bild der Fahrsituation vor bzw. hinter dem Fahrzeug dargestellt.

In einer weiteren Ausführungsform ist es auch möglich, dass die Wegsensoren 18 entweder über den Fahrzeugdatenbus 16 oder auch über entsprechende Eingänge des Steuergeräts 10 unmittelbar mit dem Steuergerät 10 zur Weiterleitung der Daten verbunden sind. In einer Ausführungsform ist es dabei auch möglich, dass die Messergebnisse der Wegssensoren 18 sowohl von dem Steuergerät 10, als auch von dem Steuergerät 17 über den Datenbus 16 ausgelesen werden.

## Patentansprüche

1. Verfahren zur Aktivierung einer Umfeldüberwachungseinrichtung in einem Fahrzeug zur Ausgabe von Warnungen vor Hindernissen in der Umgebung des Fahrzeugs, wobei die Umfeldüberwachungseinrichtung in Abhängigkeit vom einem über Sensoren ermittelten Fahrzeugzustand aktiviert wird, **dadurch gekennzeichnet, dass** die Umfeldüberwachungseinrichtung zumindest dann aktiviert wird, wenn eine Bewegung des Fahrzeugs ermittelt wird.

2. Verfahren nach Anspruch 1, **dadurch gekennzeichnet, dass** eine Bewegung des Fahrzeugs über eine Auswertung von wenigstens einem Wegsensor ermittelt wird.

3. Verfahren nach einem der vorhergehenden Ansprüche, **dadurch gekennzeichnet, dass** eine Richtung einer Fahrzeugbewegung ermittelt wird.

4. Verfahren nach Anspruch 3, **dadurch gekennzeichnet, dass** die Umfeldüberwachungseinrichtung nur in derjenigen Richtung aktiviert wird, in der eine Fahrzeugbewegung ermittelt wird.

5. Verfahren nach einem der vorhergehenden Ansprüche, **dadurch gekennzeichnet, dass** mit der Aktivierung der Umfeldüberwachungseinrichtung ein Hinweis auf die Aktivierung an den Fahrer des Fahrzeugs ausgegeben wird.

6. Steuergerät (10) für eine Umfeldüberwachungseinrichtung in einem Fahrzeug (1) mit einer Schnittstelle zu Umfelderfassungssensoren (4, 5) zur Erfassung von Hindernissen in der Umgebung des Fahrzeugs (1), **gekennzeichnet durch** eine Schnittstelle zu Sensoren (18) zur Überwachung einer Fahrzeugbewegung zu einer derartigen Bestimmung eines Zeitpunkts einer Aktivierung der Umfelderfassungssensoren in Abhängigkeit von einer erfassten Bewegung des Fahrzeugs, dass eine Aktivierung von einer Auswerteelektronik (10) und/oder von Umfelderfassungssensoren (4, 5) zumindest bei einer von den Sensoren zur Überwachung einer Fahrzeugbewegung erfassten Bewegung des Fahrzeugs (1) erfolgt.

7. Steuergerät nach Anspruch 6, **dadurch gekennzeichnet, dass** das Steuergerät (10) dazu ausgelegt ist, eine Richtung einer Bewegung des Fahrzeugs zu ermitteln.
